# EUROPEAN PATENT SPECIFICATION

(11) **EP 4 077 458 B1**
(45) Date of publication and mention of the grant of the patent: **11.02.2026**
(21) Application number: 20838431.3
(22) Date of filing: 18.12.2020
(51) Int. Cl.: C08G 18/76, C08G 18/79, C08G 18/50, C08G 18/10, C09D 175/02

(54) **POLYUREA COATING SYSTEMS FOR CONSTRUCTION WATERPROOFING**
POLYHARNSTOFFBESCHICHTUNGSSYSTEME ZUR BAUWERKSABDICHTUNG
SYSTÈMES DE REVÊTEMENT EN POLYURÉE POUR L'ÉTANCHÉITÉ DES CONSTRUCTIONS

(30) Priority: 19.12.2019 EP 19218215
(43) Date of publication of application: 26.10.2022
(73) Proprietor: Sika Technology AG, 6340 Baar (CH)
(72) Inventor: BRUCHERTSEIFER, Christian, 26123 Oldenburg (DE); WALTHER, Burkhard, 26123 Oldenburg (DE)
(74) Representative: Sika Patent Attorneys
(86) International application number: PCT/EP2020/086943
(87) International publication number: WO 2021/123107

(56) References cited:
- EP-A1- 0 748 827
- EP-A1- 0 802 209
- EP-A2- 0 420 426
- EP-A2- 1 038 897
- WO-A1-02/28935
- WO-A1-2006/104528
- JP-A- 2000 093 892
- US-A- 5 317 076
- US-A- 5 562 586
- US-A- 5 759 695
- US-B1- 6 635 737

## Description

The present invention relates to a 2K coating system consisting of two components (A) and (B) being separate from each other, wherein (A) comprises at least one constituent (a1) containing at least one aromatic moiety and bearing on average at least two primary and/or secondary amino groups, wherein (B) comprises at least one constituent (b1) containing at least one aromatic moiety and bearing on average at least two isocyanate groups, wherein each of (A) and (B) has a solid content of at least 95 wt.-%, based on the total weight of the respective component, the amount of any fillers present in component (A) does not exceed 45 wt.-%, based on the total weight of component (A), and constituent (b1) present in component (B) bears carbodiimide and/or uretonimine units as well as at least one structural unit (I), a coating composition obtainable by mixing components (A) and (B) of the inventive coating system, a use of said coating composition as sealant, in particular for providing a waterproof coating on a substrate, a method of applying the coating composition to a substrate and in particular a method of sealing a surface of a substrate such as concrete and/or steel, and a coated substrate such as a sealed concrete and/or steel substrate obtainable by this method.

### Background of the invention

Polyurea and/or polyurethane coating for various purposes are known from the prior art, e.g., from US 2012/0183692 A1, US 6,605,684 B2, US 9,328,274 B2, WO 00/69943 A1, JP 2012-92266 A and JPH-11130834 as well as from WO 2016/059083 A1. Transparent polyurea and/or polyurethane coatings prepared from solvent-free coating compositions are, e.g., known from US 2012/0183692 A1. In particular, coatings prepared from polyaspartic amines and polyisocyanates are disclosed in this reference. These coatings are used as barrier coatings in order to protect the substrate to which the coatings are applied to. High volume low pressure (HVLP) guns are used in order to apply the coating compositions to a substrate. The compositions are cured at elevated temperatures such as around 54 to 65° C. Preparation of polyurea elastomers is disclosed in US 6,605,684 B2. An aspartic ester is formed, which is then - after having been blended with a polyoxyalkylene amine - reacted with isocyanates to yield the desired polyurea elastomers. US 9,328,274 B2 relates to urethane- and sulfur-containing prepolymers prepared from an isocyanate-terminated urethane-containing adduct and a bis(vinyl-sulfonyl)alkanol as well as to a composition containing such a prepolymer and an amine catalyst. Cured sealants can be obtained from these adducts, which are polyurethanes due to crosslinking reactions of the NCO-groups with OH-groups of the alkanols. Polyurea coatings prepared from aliphatic isocyanate compounds are disclosed in JP 2012-92266 A. Polyureas prepared from mixtures of polyamines including necessarily non-aromatic polyamines are disclosed in JPH-11130834. WO 2016/059083 A1 discloses polyurea coatings for patching defects in elastomeric substrates and/or for adhesively bonding together these substrates. Polyurea compositions containing necessarily organic solvents as stabilizers and thus having an undesired high VOC-content are further known from WO 00/69943 A1.

A special cartridge system for use with a Sulzer mix and spray gun, which is used for applying a sprayable two-component sealant being a polyurea, polyurethane and/or a polyurea-polyurethane hybrid sealant to a component is disclosed in WO 2017/172906 A2. Both components are separated in two chambers and the outlet of each chamber leads to a mixing rod in which both components are mixed by passing them through the mixing rod (manually or pneumatically). The sealants disclosed do not necessarily have to be VOC-free, which is problematic from an ecological point of view. A further disadvantage of the cartridge system disclosed in WO 2017/172906 A2 is that a use of the Sulzer mixing system described therein usually results in a large amount of plastic waste as the cartridges and mixing rods are made of plastic and must be disposed of after use. US 5,759,695 discloses polyurea elastomer systems with improved adhesion to substrates.

There is a demand for coating systems, coating compositions and for a method of coating of substrates suitable for use as sealants in order to provide a waterproof barrier on substrates, in particular when the substrates are made of concrete and/or steel. In particular, there is a demand for respective coating systems and compositions, which are essentially or entirely VOC-free but nonetheless sprayable and can be also applied manually, and allow an auto-catalytic fast curing at low temperatures such as at room temperature, but also as down as 0 °C, in particular a curing to be performed at lower temperatures and in shorter time than conventional coating systems and coating compositions. At the same time, the coatings resulting from these compositions should have excellent physical mechanical properties.

### Problem

It has been therefore an object underlying the present invention to provide a coating system and a coating composition suitable for use as sealants in order to provide a waterproof barrier on substrates, in particular when the substrates are made of concrete and/or steel. It has been a particular object underlying the present invention to provide respective coating systems and compositions, which are essentially or entirely VOC-free, but are still sprayable, can nonetheless be also applied manually, and allow an auto-catalytic fast curing at low temperatures such as at room temperature, but also as down as 0 °C, in particular allow a curing to be performed at lower temperatures and in shorter time than conventional coating systems and coating compositions known in the prior art. At the same time, the waterproof coatings resulting from these compositions should have excellent physical mechanical properties, in particular with respect to (adhesive) tensile strength and elongation at break.

### Solution

This object has been solved by the subject-matter of the claims of the present application as well as by the preferred embodiments thereof disclosed in this specification, i.e. by the subject matter described herein.

A first subject-matter of the present invention is a two-component (2K) coating system consisting of two components (A) and (B) being separate from each other,
wherein component (A) comprises at least one constituent (a1) containing at least one aromatic moiety and bearing at least two primary and/or secondary amino groups,
wherein component (B) comprises at least one constituent (b1) containing at least one aromatic moiety and bearing at least two isocyanate groups,
wherein each of components (A) and (B) has a solid content of at least 95 wt.-%, based on the total weight of the respective component,
wherein the amount of any fillers present in component (A) does not exceed 45 wt.-%, preferably is in the range of from >5 wt.-% to 45 wt.-%, based on the total weight of component (A),
characterized in that constituent (b1) present in component (B) bears at least one carbodiimide and/or uretonimine unit and further comprises at least one structural unit 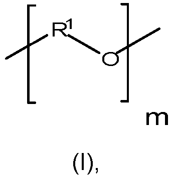 wherein R¹ is a C₂ to C₈ alkylene residue, and parameter m is an integer in the range of from 1 to 200.

The NCO content present in constituent (b1) is in the range of from 20 to 35 wt.-%, based on the total weight of constituent (b1).

A further subject-matter of the present invention is a coating composition obtainable by mixing components (A) and (B) of the inventive coating system with each other.

A further subject-matter of the present invention is a use of the inventive coating composition as sealant, in particular for providing a waterproof coating on a substrate, preferably on a steel and/or concrete substrate.

A further subject-matter of the present invention is a method of applying the inventive coating composition to a substrate and in particular a method of sealing an optionally pre-coated surface of a substrate, preferably made of concrete and/or steel, by applying the inventive coating composition thereon as sealant.

A further subject-matter of the present invention is a sealed substrate such as a coated and in particular sealed concrete and/or steel substrate obtainable by the inventive method.

It has been surprisingly found that the inventive coating system and the inventive coating composition are suitable for use in construction waterproofing and to provide respective waterproofing membrane systems, in particular when applied on concrete and/or steel. The resulting membranes exhibit excellent physical-mechanical properties. The inventive coating compositions can be used as sealants, for example for buildings, roofs, bridges, foundations, ships etc. The inventive coating compositions can also be used for (interior or exterior) sealing of floors and/or floor covering coatings in the industrial sector, but also in the bulk material processing sector (for conveyor belts etc.). It has been found that the coatings obtained from the inventive coating compositions display excellent properties relevant in particular for structural waterproofing such as an excellent crack bridging capability.

It has been found that coatings obtained from the inventive coating compositions exhibit significantly better properties compared to conventional polyurea coating systems, e.g., (i) an improved chemical resistance, for example to liquid media, in particular organic solvents such as methanol and toluene, (ii) an improved abrasion resistance and (iii) an improved long-term heat resistance.

It has been further found that the inventive coating composition when applied as sealant may be transparent (clear), in particular in case it does not contain or it does not essentially contain any fillers. Surprisingly, it has been found that coatings obtained from the inventive coating compositions exhibit significantly better properties with respect to tensile strength, Shore A hardness, elongation at break and/or adhesive tensile strength, in particular adhesive tensile strength on concrete, than conventional non-transparent polyurea coatings, which have been, e.g., obtained from coating compositions containing high amounts of fillers such as amounts of fillers exceeding 40 wt.-%, based on the total weight of the coating composition. This allows application of the inventive coating composition in thinner film thicknesses compared to the non-transparent coating compositions containing in particular fillers and/or pigments in comparably high amounts such as amounts of fillers exceeding 40 wt.-%, based on the total weight of the coating composition. This in turn leads to reduction of costs and thus to an economic advantage.

Further, it has been found that coatings obtained from the inventive coating compositions exhibit a much smaller volume conductive resistance of approximately 180 MOhm compared to conventional non-transparent polyurea coatings, which often have a volume conductive resistance in the range of > 3GOhm. This is of particular importance for coatings/seals on concrete (sparking in process areas of the chemical industry).

It has been surprisingly found that the inventive coating system and the inventive coating composition allow fast drying/curing even below room temperature, in particular at temperatures down to 0 °C, and at the same time show a good adhesion to the substrate, even at temperatures below room temperature such as 0 °C. In contrast to that, conventional polyurea systems only show insufficient adhesion to the substrate at this temperature. It has been in particular found that the adhesion of a coating obtained from the inventive coating composition on concrete is exceptionally good: even after application at 0 °C an adhesive tensile strength (pull-off strength) of >1.6 MPa on concrete is achieved. It has been further surprisingly found that the inventive coating system and the inventive coating composition making use of aromatic moiety and NCO-groups containing constituent (b1) show a much faster curing speed at temperatures below room temperature such as 0 °C compared to conventionally used NCO-group containing constituents such as respective aliphatic and thus non-aromatic constituents like IPDI.

It has been further surprisingly found that the inventive coating system and the inventive coating composition allow an auto-catalytic rapid curing at low temperatures such as at room temperature (18 to 29 °C), in particular a curing to be performed at lower temperatures and in shorter time than conventional coating systems and coating compositions known in the prior art. Such a shortening of the process time results in a shortening of the customer's waiting time until the product has hardened. It has been found that curing of the inventive coating composition only takes two hours or even less, in particular 2 hours to 1.5 hours. Further, it is not only not necessary to apply high temperatures, e.g. of 40 °C or above for curing, but that there is also no need for applying external impulses such as UV light in order for the curing to take place. Thus, no additional energy is required.

It has been further found that the inventive coating systems and compositions can be provided in particular for the above mentioned purpose in essentially or entirely VOC-free form. Nonetheless, the inventive coating system is still sprayable, in particular when using a high-pressure system for mixing and applying with countercurrent injection technology, which in particular allows mixing and spraying to take place simultaneously. It has been further found that the use of such a high-pressure system does not result in any undesired producing of any plastic waste unlike, e.g., when using a Sulzer mix and spray gun such as disclosed in WO 2017/172906 A2. In addition, the inventive coating composition - since it is essentially or entirely VOC-free when applied to the substrate such as a concrete and/or steel substrate - does not have to "rest" after application because it is a solvent-free or essentially solvent-free system. Thus, no flashing-off period is necessary.

It has been found that the inventive coating composition can be applied both manually and by a machine (e.g. by means of a mixing device, cartridge and/or spray device such as a spray gun).

### Detailed description of the invention

### Inventive coating system and inventive coating composition

The inventive coating system is a two-component (2K) coating system consisting of two components (A) and (B) being separate from each other. For example, components (A) and (B) of the inventive coating system can be stored separately until they are mixed with each other in order to prepare a coating composition, which can be in particular used as sealant, in particular for providing a waterproof barrier coating on suitable substrates such as concrete and/or steel.

The inventive coating system consists of a component (A), which comprises at least one constituent that bears primary and/or secondary amino groups, and of a component (B), which comprises at least one constituent that bears isocyanate (NCO) groups. Thus, upon mixing of these two components a polyurea or polyurea-based coating composition is formed by reaction of the amino groups with the isocyanate groups. In the sense of the present invention a "polyurea coating composition" is formed in case component (A) does not contain any additional constituents bearing OH-groups. In the sense of the present invention a "polyurea based coating composition" is formed in case component (A) contains additional constituents bearing OH-groups - however, said OH-groups being present in amounts significantly lower than of the amino groups - that lead to additional formation of urethane groups upon crosslinking with the isocyanate groups besides the polyurea formation.

Preferably, the inventive coating system is a sealant system consisting of components (A) and (B).

Preferably, none of the components (A) and (B) of the inventive coating system contains any curing catalysts. Preferably, of course, also the inventive coating composition does not contain any curing catalysts. Curing catalysts are not needed as the inventive coating system is, preferably, auto-catalytically cross-linkable, i.e. the relevant constituents present therein can be crosslinked via an auto-catalytic reaction.

Preferably, none of the components (A) and (B) of the inventive coating system contains any constituents, which in turn contain one or more sulfur atoms. Preferably, of course, also the inventive coating composition does not contain any constituents, which contain one or more sulfur atoms. If any constituent bearing one or more sulfur atoms is present in one of the components (A) and (B) of the inventive coating system and/or in the inventive coating composition at all, it is preferably selected from the group consisting of mercaptosilanes only.

Preferably, none of the components (A) and (B) of the inventive coating system contains any flame retardants. In particular, none of the components (A) and (B) of the inventive coating system contains any phosphorous-containing flame retardants. Preferably, of course, also the inventive coating composition does not contain any flame retardants, in particular no phosphorous-containing flame retardants.

Preferably, both components (A) and (B) of the inventive coating system are free or essentially free of organic solvents. The same preferably applies to the inventive coating compositions. In the sense of the present invention the term "free of organic solvents" preferably means that no organic solvents at all are present. In the sense of the present invention the term "essentially free of organic solvents" preferably means that essentially no organic solvents are present. This means that at least no organic solvents are added on purpose to any of the inventively used components (A) and (B) and to the inventive coating composition. It may, however, not be ruled out that remaining residues of organic solvents formed upon preparation of any of the constituents used for preparing the inventively used components (A) and (B) are present therein. Preferably, the amounts of any organic solvents present in each of the components (A) and (B) is less than 10 wt.-%, more preferably less than 8 wt.-%, even more preferably less than 6 wt.-%, still more preferably less than 5 wt.-%, yet more preferably less than 2.5 wt.-%, in particular less than 1.0 wt.-% or less than 0.5 wt.-%, most preferably less than 0.1 wt.-% or less than 0.05 wt.-% or less than 0.01 wt.-%, in each case based on the total weight of component (A) or (B).

The solids content of component (A) of the coating system according to the invention is at least 95 wt.-%, even more preferably >95 wt.-%, yet more preferably >97.5 wt.-%, in particular is >98 or >99 or >99.5 wt.-%, most preferably is 100 wt.-%, in each case based on the total weight of component (A). The solids content of component (B) of the coating system according to the invention is at least 95 wt.-%, preferably >95 wt.-%, more preferably >97.5 wt.-%, in particular is >98 or >99 or >99.5 wt.-%, most preferably is 100 wt.-%, based in each case on the total weight of component (B). The solids content of the coating composition according to the invention is preferably >95 wt.-%, more preferably >97.5 wt.-%, in particular is >98 or >99 or >99.5 wt.-%, most preferably is 100 wt.-%, based in each case on the total weight of the coating composition. The determination of the solids content, i.e. of the non-volatile content, is carried out according to the method described hereinafter.

Preferably, both components (A) and (B) of the inventive coating system are free or essentially free of water. The same applies to the inventive coating compositions. In the sense of the present invention the term "free of water" preferably means that no water at all is present. In the sense of the present invention the term "essentially free of water" preferably means that essentially no water is present. This means that at least no water is added on purpose to any of the inventively used components (A) and (B) and to the inventive coating composition. It may, however, not be ruled out that remaining residues of water formed upon preparation of any of the constituents used for preparing the inventively used components (A) and (B) are present therein. Preferably, the amount of any water present in each of the components (A) and (B) is less than 1 wt.-%, more preferably less than 0.5 wt.-%, even more preferably less than 0.1 wt.-%, still more preferably less than 0.05 wt.-%, yet more preferably less than 0.01 wt.-%, in particular less than 0.005 wt.-% or less than 0.001 wt.-%, in each case based on the total weight of component (A) or (B).

Preferably, none of the components (A) and (B) of the inventive coating system contains any constituents, which are crosslinkable via actinic radiation such as UV irradiation. Preferably, of course, also the inventive coating composition does not contain any constituents, which are crosslinkable via actinic radiation such as UV irradiation. In particular, none of the components (A) and (B) of the inventive coating system contains any constituents, which contain (meth)acrylic groups and/or unsaturated C-C-double bonds. The same applies, of course, also preferably to the inventive coating composition. Thus, preferably, the inventive coating composition as such is not crosslinkable via actinic radiation such as UV irradiation.

The term "comprising" in the context of the present invention in connection with the components (A) and (B) of the inventive coating system, and the coating composition according to the invention preferably has the meaning "consisting of". In this case, in addition to the constituents (a1) and (b1) present within components (A) and (B) one or more of the other constituents mentioned hereinafter such as constituents (a1) to (a7) optionally contained in each of the components of the inventive coating system or coating composition according to the invention may be contained in the coating system, its components (A) and (B) or coating composition according to the invention. All components can be present in each case in their preferred embodiments mentioned hereinafter.

The proportions and amounts in wt.-% (% by weight) of constituents (a1) and (b1) and further optionally present constituents (a1) to (a7) in the coating system, its components (A) and (B), or composition according to the invention add up to 100 wt.-%, based on the total weight of the respective component (A) or (B) of the coating system or based on the total weight of the coating composition.

### Components (A) and (B)

Component (A) comprises at least one constituent (a1) containing at least one aromatic moiety and bearing at least two primary and/or secondary amino groups. Preferably, constituent (a1) comprises on average at least two primary and/or secondary amino groups. Preferably, constituent (a1) comprises at least two, preferably, precisely two, aromatic moieties, more preferably at least two, preferably precisely two, phenyl moieties.

Preferably, constituent (a1) comprises at least two primary amino groups.

Preferably, the at least two primary and/or secondary amino groups are directly bound to the at least one aromatic moiety of constituent (a1). More preferably, in case constituent (a1) comprises at least two, preferably, precisely two, aromatic moieties - more preferably at least two, preferably precisely two, phenyl moieties - at least one, preferably precisely one, of the at least two, preferably precisely two, primary and/or secondary amino groups is directly bound to each of the at least two, preferably precisely two, aromatic moieties.

The presence of precisely two amino groups is preferred as by this linear polyureas are obtained upon crosslinking with constituent (b1) of component (B).

Preferably, constituent (a1) further comprises at least one polyether moiety. Preferably, said polyether moiety is positioned structurally between the at least two aromatic moieties of constituent (a1) in case at least two of said aromatic moieties are present. However, in addition to or as alternative to said at least one polyether moiety, constituent (a1) may comprise at least one of a polyester, polybutadiene and/or poly(meth)acrylate unit.

Preferably, the at least one polyether moiety of constituent (a1) is a structural unit (II): 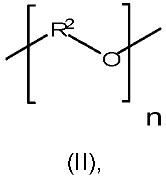
wherein R² is a C₂ to C₈ alkylene residue, more preferably a C₂ to C₆ alkylene residue, in particular a C₂ to C₄ alkylene residue and
parameter n is an integer in the range of from 1 to 100, more preferably in the range of from 1 to 40, in particular in the range of from 1 to 20 or from 1 to 10, most preferably between 1 and 5.

Preferably, constituent (a1) is a constituent of general formula (III): 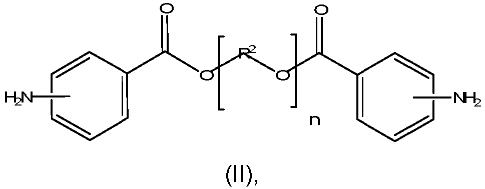 wherein R² and n have the aforementioned meanings and wherein each of the amino groups is positioned in m, o or p-position independently of one another in each of the phenyl rings, in particular in p-position in each case.

In particular preferred are constituents (a1) of general formula (IV) and/or (V): 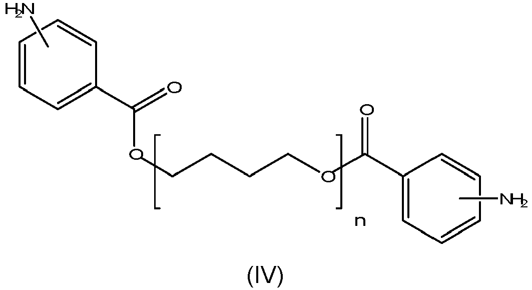 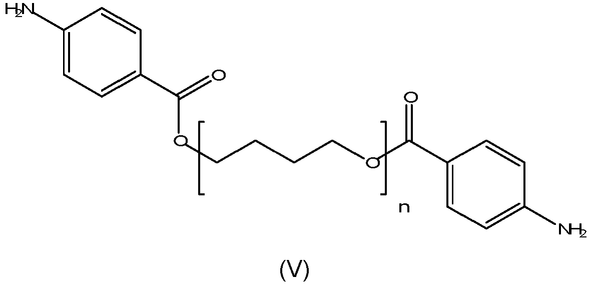 wherein n has in each case the aforementioned meaning.

Preferably, the at least one constituent (a1) has a number average molecular weight (Mₙ) in the range of from 200 to 7 500 g/mol, more preferably of from 200 to 5 000 g/mol, in particular of from 250 to 3 000 g/mol or of from 250 to 2 000 g/mol, most preferred of from 250 to 1 500 g/mol. The determination of Mₙ is carried out according to the method described hereinafter.

Constituent (a1) - besides the at least two amino groups - may bear in principal further functional groups that are reactive towards NCO-groups such as OH-groups. However, preferably, constituent (a1) does not comprise such further functional groups, i.e. the amino groups present therein are the only groups that are reactive towards NCO groups.

Preferably, constituent (a1) is present in component (A) in an amount in the range of from 50 to 95 wt.-%, more preferably of from 55 to 90 wt.-%, even more preferably of from 60 to 85 wt.-%, still more preferably of from 65 to 85 wt.-%, in particular of from 70 to 80 wt.-%, based on the total weight of component (A).

Preferably, the amine number of constituent (a1) is in the range of from 50 to 400 mg KOH/g, more preferably of from 75 to 300 mg KOH/g. The amine number is determined according to DIN 16945:1989-03.

The amount of any fillers present in component (A) of the inventive coating system does not exceed 45 wt.-%, preferably is in the range of from >5 wt.-% to 45 wt.-%, based on the total weight of component (A). The term "filler" is known to the skilled person, from DIN 55943 (date: October 2001), for example. A "filler" for the purposes of the present invention is preferably a component, which is substantially, preferably entirely, insoluble in the medium surrounding them, such as each of components (A) and (B) and the composition of the invention, for example, and which is used in particular for increasing the volume. "Fillers" in the sense of the present invention preferably differ from "pigments" in their refractive index, which for fillers is < 1.7, while the refractive index for pigments is ≥ 1.7. Preferably, a "filler" for the purposes of the present invention is an inorganic filler. Examples are barium sulfate or talcum.

Preferably, the amount of any fillers present in component (A) of the inventive coating system does not exceed 40 wt.-%, more preferably does not exceed 35 wt.-%, even more preferably does not exceed 30 wt.-%, still more preferably does not exceed 25 wt.-%, yet more preferably does not exceed 20 wt.-%, in particular does not exceed 15 wt.-% or 10 wt.-%, in each case based on the total weight of component (A). It is also possible that component (A) does not comprise any fillers. In the sense of the present invention this preferably means that component (A) is free or at least essentially free of fillers. This means that at least no fillers are added on purpose to the inventively used component (A) and to the inventive coating composition. Preferably, the amounts of fillers present in component (A) of the inventive coating system is in the range of from 0 to 45 wt.-% or of from >5 to 45 wt.-%, more preferably in the range of from 0 to 40 wt.-% or of from >5 to 40 wt.-%, even more preferably in the range of from 0 to 35 wt.-% or of from >5 to 35 wt.-%, still more preferably in the range of from 0 to 30 wt.-% or of from >5 to 30 wt.-%, yet more preferably in the range of from 0 to 25 wt.-% or of from >5 to 25 wt.-% or of from 0 to 20 wt.-% or of from >5 to 20 wt.-%, in particular in the range of from 0 to 15 wt.-% or of from >5 to 15 wt.-%, or of from 0 to 10 wt.-% or of from >5 to 10 wt.-%, in each case based on the total weight of component (A).

Preferably, the amounts of any pigments present in components (A) of the inventive coating system is in the range of from 0 to 45 wt.-%, more preferably in the range of from 0 to 40 wt.-%, even more preferably in the range of from 0 to 35 wt.-%, still more preferably in the range of from 0 to 30 wt.-%, yet more preferably in the range of from 0 to 25 wt.-% or of from 0 to 20 wt.-%, in particular in the range of from 0 to 15 wt.-%, or of from 0 to 10 wt.-%, in each case based on the total weight of component (A). In particular, however, none of components (A) and (B) of the inventive coating systems comprises any pigments. In the sense of the present invention this preferably means that both components (A) and (B) are free or at least essentially free of pigments. This means that at least no pigments are added on purpose to any of the inventively used components (A) and (B) and to the inventive coating composition. Preferably, the amounts of pigments present in each of the components (A) and (B) is less than 3 wt.-%, more preferably less than 2 wt.-%, even more preferably less than 1 wt.-%, still more preferably less than 0.5 wt.-%, yet more preferably less than 0.1 wt.-%, in particular less than 0.01 wt.-%, in each case based on the total weight of component (A) or (B), respectively. The term "pigment" is known to the skilled person from DIN 55943 (date: October 2001), for example. A "pigment" in the sense of the present invention refers preferably to components in powder or flake form which are substantially, preferably entirely, insoluble in the medium surrounding them, such as each of components (A) and (B) and the composition of the invention, for example, and which is a colorant and/or substance which can be used as pigment on account of their magnetic, electrical and/or electromagnetic properties.

Preferably, both components (A) and (B) of the inventive coating system are transparent, i.e. clear. Preferably, of course, also the inventive coating composition is transparent, i.e. clear. In particular, none of the components (A) and (B) of the inventive coating system contains any pigment, in particular any color and/or effect imparting pigment. The same applies, of course, also preferably, to the inventive coating composition.

Component (A) of the inventive coating system may comprise one or more further optional constituents besides constituent (a1). All of these further optional constituents are different from each other and, further, different from constituent (a1).

Component (A) of the inventive coating system may further comprise one or more constituents (a2) bearing one or more OH-groups. Such constituents may be monomers, oligomers and/or polymers. Examples are OH-functional polyesters, OH-functional poly(meth)acrylates, OH-functional (meth)acrylic copolymers and/or OH-functional polyethers. However, preferably component (A) does not comprise such a constituent (a2).

As outlined hereinbefore, preferably component (A) does not contain any flame retardants such as phosphorous-containing flame retardants. However, optionally, component (A) of the inventive coating system may comprise at least one flame retardant as constituent (a3) such as at least one phosphorous-containing flame retardant, in particular at least one phosphate ester. If a flame retardant is used, it preferably is liquid (at 1 bar and 23°C). Liquid flame retardants are preferred as they do not potentially impair the transparency of the final coating in case such a transparency is desired. In case a flame retardant is present in component (A), it is preferably present therein in an amount of 0.1 to 30 wt.-%, more preferably of 1 to 25 wt.-%, in particular of 5 to 20 wt.-%, based on the total weight of component (A). Higher amounts than 30 wt.-% are not desired as the mechanical properties of the final coating may deteriorate otherwise. An example of a suitable phosphate as flame retardant is diphenylcresylphosphate. It is also possible to use other phosphates such as e.g. triethyl phosphate, isopropylated triaryl phosphates and 2-ethylhexyl diphenyl phosphate. In principal additionally or alternatively also other flame retardants such as halogen-based flame retardants such as brominated or chlorinated flame retardants may be used, e.g. tris-(2-chloroisopropyl)phosphate. Another possibility would be the use of inorganic liquid compounds, such as liquid sodium water glasses.

Component (A) of the inventive coating system may further comprise one or more light stabilizers, in particular one or more UV stabilizers as constituent (a4). Examples are for instance sterically hindered amines (HALS: hindered amine light stabilizer). In principle, all commercially available light stabilizers of the Tinuvin^{®} series or from other manufacturers can be used. Liquid light stabilizers are preferred as they do not potentially impair the transparency of the final coating in case such a transparency is desired. In case a light stabilizer is present in component (A), it is preferably present therein in an amount of 0.05 to 5 wt.-%, more preferably of 0.1 to 3.5 wt.-%, in particular of 0.1 to 2. wt.-%, based on the total weight of component (A).

Component (A) of the inventive coating system may further comprise one or more adhesion promoters as constituent (a5). In particular, organosilanes can be used as constituent (a5). Examples are e.g. (3-aminopropyl)trimethoxysilane, (3-aminopropyl)triethoxysilane, N-2-aminoethyl-3-aminopropyltrimethoxysilane, (3-mercaptopropyl)trimethoxysilane, (3-mercaptopropyl)triethoxysilane, (3-glycidyloxypropyl)trimethoxysilane and/or (3-glycidyloxypropyl)triethoxysilane, vinyltrimethoxysilane. Additionally or alternatively, other adhesion promoters may be used, e.g., titanates such as titanium acetylacetonate (TAA) and/or Ti-n-butanolate (TnBt). In case a constituent (a5) is present in component (A), it is preferably present therein in an amount of 0.05 to 5 wt.-%, more preferably of 0.1 to 3.5 wt.-%, in particular of 0.1 to 2 wt.-%, based on the total weight of component (A).

Component (A) of the inventive coating system may further comprise one or more additives as constituent (a6) selected from the group consisting of defoamers, reactive diluents such as bis-oxazolidines and/or aldimines, rheological additives, plasticizers such as phthalates, and viscosity reducers, in particular non-reactive viscosity reducers such as hydrocarbon mixtures based on naphthalene derivatives and/or indene-coumarone resins, tall oil and rapeseed methyl ester (biodiesel) and rapeseed oil and/or other ester-based diluents, as well as mixtures of such additives. These different additives to be used as constituent (a6) are different from one another. The use of at least one bis-oxazolidine containing amino groups such as secondary amino-groups is in particular preferred as constituent (a6). The bis-oxazolidine does not need to contain free amino groups. It is possible and preferred that any free amino groups contained therein such as secondary amino groups may be formed in situ later within component (A) or within the inventive coating composition, for example due to reaction with (residual) amounts of water. In other words, the bis-oxazolidine may contain amino groups in protected form. The same applies to any optionally present OH-groups within the bis-oxazolidine. An example is the commercial product Incozol^{®} LV. In case at least one constituent (a6) is present in component (A), it is preferably present therein in an amount of 0.05 to 40 wt.-%, more preferably of 0.1 to 30 wt.-%, in particular of 0.1 to 20. wt.-%, based on the total weight of component (A). Specifically, in case at least one defoamer is present, its amount is preferably in the range of from 0.1 to 2.5 wt.-%, based on the total weight of component (A). Specifically, in case at least one reactive diluent is present, its amount is preferably in the range of from 0.1 to 20 wt.-%, based on the total weight of component (A). Specifically, in case at least one rheological additive is present, its amount is preferably in the range of from 0.1 to 5 wt.-%, based on the total weight of component (A). Specifically, in case at least one plasticizer is present, its amount is preferably in the range of from 0.1 to 2.5 wt.-%, based on the total weight of component (A). Specifically, in case at least one viscosity reducer is present, its amount is preferably in the range of from 0.1 to 20 wt.-%, based on the total weight of component (A).

Component (A) of the inventive coating system may further comprise one or more chain extenders as constituent (a7). Suitable chain extenders are diamines and/or triamines different from constituent (a1), which, preferably, do not contain any aromatic moieties. Rather, these chain extenders are diamines and/or triamines bearing aliphatic including cycloaliphatic residues. Such chain extenders may be used to adjust certain processing and final properties of the final coating. As diamines and/or triamines in particular dimer (fatty) amines and/or trimer (fatty) amines can be used, most preferred dimer amines. In particular, the use of such dimer amines may lead to a further improvement of the sprayability of the inventive coating composition by introducing a chemical thixotropy. Additionally, a faster drying/curing may be achieved. In addition, the use of dimer diamines may significantly improve the strength and chemical resistance of the coating. An example of a suitable diamine is Priamine^{®} 1073 from Croda. The chain extenders react - besides constituent (a1) and optionally present constituent (a2) - with the NCO-groups of constituent (b1) of component (B). In case a constituent (a7) such as a diamine, in particular a dimer amine, is present in component (A), it is preferably present therein in an amount of 0.1 to 20 wt.-%, more preferably of 0.5 to 7.5 wt.-%, in particular of 1.0 to 5 wt.-%, based on the total weight of component (A).

Component (A) of the inventive coating system may comprise one or more further constituents bearing at least two primary and/or secondary amino groups, which are different from constituent (a1) such as, e.g. non-aromatic amino-group containing constituents and/or constituents (a6) and/or (a7). In that case the amount of constituent (a1) is preferably higher than the amount of the one or more other amino-group containing constituent(s) in component (A). Preferably, the relative weight ratio of constituent (a1) to said one or more other amino-group containing constituent(s) in component (A) is at least in the range of from 2:1 or at least in the range of from 3:1 or at least in the range of from 5:1 or at least in the range of from 10:1.

In particular, constituent (a1) is the only amino-group containing constituent present in component (A). Alternatively, constituent (a1) is in particular used in combination with a constituent (a6) such as an amino-groups containing bis-oxazolidine, in particular a bis-oxazolidine containing two amino groups.

Component (B) of the inventive coating system comprises at least one constituent (b1) containing at least one aromatic moiety and bearing at least two isocyanate groups. Preferably, constituent (b1) comprises on average at least two isocyanate groups. Preferably, the NCO-functionality is of from 2.0 to 3.0, more preferably of from 2.0 to 2.8, in particular of from 2.0 to 2.5, most preferably of from >2.0 to 2.2.

The NCO content, i.e. the amount of NCO-groups present in constituent (b1) is in the range of from 20 to 35 wt.-%, preferably of from 15 to 30 wt.-%, in particular of from 20 to 27.5 wt.-%, based on the total weight of constituent (b1).

Preferably, constituent (b1) is based on/prepared by making use of an aromatic diisocyanate. The term aromatic diisocyanate herein refers to an isocyanate compound in which two isocyanate groups present in a molecule are directly bound to an aromatic ring. Preferred aromatic diisocyanates are 4,4'-diphenylmethane diisocyanate and 2,4'-diphenylmethane diisocyanate (MDI), 4,4'-diphenyl ether diisocyanate, p-phenylene diisocyanate, m-phenylene diisocyanate, 3,3'-dimethoxy-4,4'-biphenyl diisocyanate, o-toluidine diisocyanate, naphthylene diisocyanate, 2,4-tolylene diisocyanate, 2,6-tolylene diisocyanate, 3,3'-dimethyl-4,4'-diphenyl ether diisocyanate and 3,3'-dimethyl-4,4'-diphenyl ether diisocyanate. These may be used singly or in combinations of two or more thereof. A particularly preferable aromatic diisocyanate is at least one selected from the group consisting of 4,4'-diphenylmethane diisocyanate, 2,4'-diphenylmethane diisocyanate, 2,4-tolylene diisocyanate and 2,6-tolylene diisocyanate. 4,4'-diphenylmethane diisocyanate (MDI) is most preferred.

The at least one carbodiimide and/or uretonimine structural unit within constituent (b1) can be formed by various methods where an aromatic diisocyanate is subjected to a decarboxylation condensation reaction accompanied with decarbonation to produce isocyanate-terminated constituents (b1) containing carbodiimide and/or uretonimine units. The decarbonation condensation reaction of the aromatic diisocyanate compound usually progresses in the presence of a carbodiimidation and/or uretonimination catalyst. Examples of such catalysts can include phospholene oxides such as 1-phenyl-2-phospholene-1-oxide, 3-methyl-1-phenyl-2-phospholene-1-oxide, 1-ethyl-2-phospholene-1-oxide, 3-methyl-2-phospholene-1-oxide, and 3-phospholene isomers thereof. The amount of the catalyst is usually 0.1 to 1.0 wt.-% relative to the aromatic diisocyanate compound for use in carbodiimidation and/or uretonimination.

Constituent (b1) present in component (B) bears at least one carbodiimide and/or uretonimine unit. Carbodiimide units have the following structural formula and can be formed by condensation of two isocyanate groups:

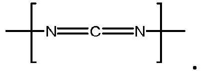

Uretonimine units have the following structural formula and can be formed by condensation of three isocyanate groups:

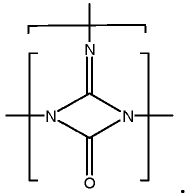

Preferably, the amount of carbodiimide and/or uretonimine units, in particular of uretonimine units, within constituent (b1) is in the range of from 4 to 18 wt.-%, more preferably of from 5 to 16 wt.-%, in particular of from 6 to 14 wt.-%, most preferred of from 8 to 12 wt.-%, in each case based on the total weight of constituent (b1).

For example, in case constituent (b1) is based on/prepared by making use of 4,4'-diphenylmethane diisocyanate (MDI) as an aromatic diisocyanate and contains at least one carbodiimide unit, it can have/can comprise the following structure, wherein parameter o is an integer of from 1 to 50:

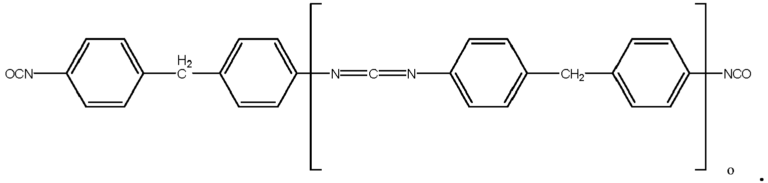

For example, in case constituent (b1) is based on/prepared by making use of 4,4'-diphenylmethane diisocyanate (MDI) as an aromatic diisocyanate and contains precisely one uretonimine unit, it can have/can comprise the following structure:

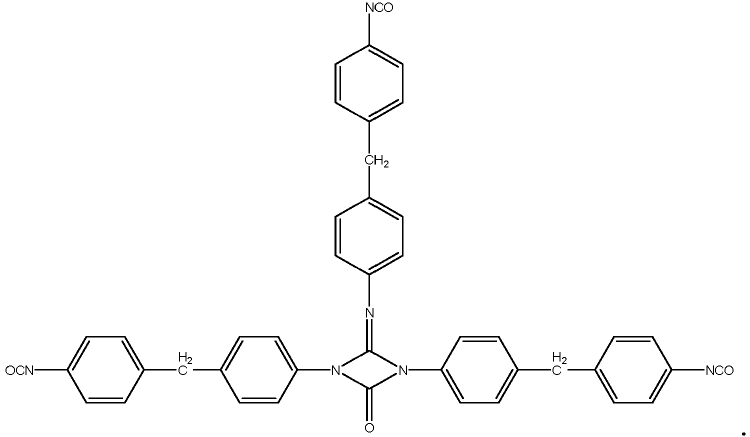

As outlined above, an aromatic diisocyanate such as MDI can be used to prepare constituent (b1), wherein at least one carbodiimide and/or uretonimine structural unit is formed. It is additionally or alternatively possible to use - instead of or in addition to monomeric MDI (MMDI) - polymeric aromatic diisocyanates such as PMDI. The PMDI to be used preferably has a number average molecular weight (Mₙ) in the range of from 400 to 5 000 g/mol. The determination of Mₙ is carried out according to the method described hereinafter. The PMDI preferably has an NCO functionality in the range of from 2.6 to 3.0.

However, the inventively used constituent (b1) of component (B) necessarily bears ether segments due to the presence of at least one structural unit (I) in constituent (b1).

Thus, the aromatic diisocyanate used for preparing (b1) such as both MMI and PMDI is first - i.e. before performing a condensation reaction in order to form at least one carbodiimide and/or uretonimine unit - subjected to prepare MMI and/or PMDI based prepolymers by reaction of MMI and/or PMDI with OH-functional extenders, in particular with OH-functional polyethers such as polyether diols. As a result, isocyanate-functional prepolymers based on MMDI and/or PMDI can be prepared, which bear at least two NCO-groups and contain, e.g., polyether segments. For example, MMDI can be "extended" by using a polyether polyol and then the resulting prepolymer is subjected to a condensation reaction in order to form at least one carbodiimide and/or uretonimine unit.

Preferably, constituent (b1) is obtainable by subjecting at least one prepolymer of an aromatic diisocyanate, preferably of MDI, bearing at least two isocyanate groups, which prepolymer has been prepared by reaction of a polyether polyol with at least one aromatic diisocyanate and/or a polymer thereof, to a decarboxylation condensation reaction under formation of at least one carbodiimide and/or uretonimine unit.

The prepolymers such as MDI prepolymers preferably have a number average molecular weight (Mₙ) in the range of from 200 to 75 000 g/mol, more preferably of from 220 to 50 000 g/mol, in particular of from 300 to 35 000 g/mol or of from 350 to 20 000 g/mol. The determination of Mₙ is carried out according to the method described hereinafter. The prepolymers such as MDI prepolymers preferably have an NCO functionality in the range of from 1.9 to 3.0.

It is particularly preferred to use a prepolymer such as an MDI prepolymer as described above in the above-described decarboxylation condensation reaction accompanied with decarbonation to produce isocyanate-terminated constituents (b1) containing at least one carbodiimide and/or uretonimine unit. By this, it is possible to prepare constituents (b1) having not only at least one carbodiimide and/or uretonimine unit, but also polyether units.

Constituent (b1) comprises at least one polyether moiety. The at least one polyether moiety of constituent (b1) is a structural unit (I): 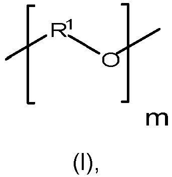
wherein R¹ is a C₂ to C₈ alkylene residue, more preferably a C₂ to C₆ alkylene residue, in particular a C₂ to C₄ alkylene residue, most preferably a C₂ and/or C₃ alkylene residue and
parameter m is an integer in the range of from 1 to 200, more preferably in the range of from 1 to 100, in particular in the range of from 1 to 40, most preferably between 1 and 10.

Component (B) of the inventive coating system may comprise further constituents besides (b1). Preferably, however, component (B) of the inventive coating system does not comprise any further constituent other than constituent (b1). In case further constituents such as a constituent (b2) are present, these are preferably selected from monomeric aromatic diisocyanates, e.g., MDI as such, and polymeric aromatic diisocyanates such as PMDI.

Component (B) of the inventive coating system may comprise one or more further constituents bearing at least two isocyanate groups, which are different from constituent (b1) such as, e.g. non-aromatic NCO-group containing constituents. In that case the amount of constituent (b1) is preferably higher than the amount of the one or more other NCO-group containing constituent(s) in component (B). Preferably, the relative weight ratio of constituent (b1) to said one or more other NCO-group containing constituent(s) in component (B) is at least 2:1 or at least 3:1 or at least 5:1 or at least 10:1.

In particular, constituent (b1) is the only NCO-group containing constituent present in component (B).

Preferably, the amount of structural unit (I) within constituent (b1) is 30 wt.-% or less, in particular 25 wt.-% or less, most preferably 20 wt.-% or less, in each case based on the total weight of constituent (b1). Preferably, structural unit (I) is present within constituent (b1) in an amount of 1 to 30 wt.-%, more preferably of 1.5 to 25 wt.-%, in particular of 2 to 20 wt.-%, most preferably of 2.5 to 15 wt.-% or of 3.0 to 10 wt.-%, in each case based on the total weight of constituent (b1).

Preferably, the at least one constituent (b1) has a number average molecular weight (Mₙ) in the range of from 300 to 60 000 g/mol, more preferably of from 400 to 45 000 g/mol, in particular of from 500 to 35 000 g/mol or of from 600 to 25 000 g/mol, most preferably of from 1 000 to 15 000 g/mol or of from 1 500 to 10 000 g/mol. The determination of Mₙ is carried out according to the method described hereinafter.

Preferably, constituent (b1) is present in component (B) in an amount in the range of from 80 to 100 wt.-%, more preferably of from 85 to 100 wt.-%, even more preferably of from 90 to 100 wt.-%, still more preferably of from 95 to 100 wt.-%, in particular of from 97.5 to 100 wt.-%, based on the total weight of component (B).

Preferably, component (B) of the inventive coating system does not comprise any flame retardants such as phosphorous-containing flame retardants. In particular, component (B) does not contain any organic phosphate esters such as triethyl phosphate.

Preferably, the amount of any fillers present in component (B) of the inventive coating system does not exceed 40 wt.-%, more preferably does not exceed 35 wt.-%, even more preferably does not exceed 30 wt.-%, still more preferably does not exceed 25 wt.-%, yet more preferably does not exceed 20 wt.-%, in particular does not exceed 15 wt.-% or 10 wt.-%, in each case based on the total weight of component (B). It is also possible and preferred that component (B) does not comprise any fillers. In the sense of the present invention this preferably means that component (B) is free or at least essentially free of fillers. This means that at least no fillers are added on purpose to the inventively used component (B) and to the inventive coating composition.

A further subject-matter of the present invention is a coating composition obtainable by mixing components (A) and (B) of the coating system with each other.

All preferred embodiments described above herein in connection with the inventive coating system and the preferred embodiments thereof, are also preferred embodiments of the inventive coating composition.

Preferably, the inventive coating composition is a sealant.

Preferably, the amounts of any fillers present in the inventive coating composition is in the range of from 0 to 40 wt.-% or of from >4.0 to 40 wt.-%, more preferably in the range of from 0 to 35 wt.-% or of from >4.0 to 35 wt.-%, even more preferably in the range of from 0 to 30 wt.-% or of from >4.0 to 30 wt.-%, still more preferably in the range of from 0 to 25 wt.-% or of from >4.0 to 25 wt.-%, yet more preferably in the range of from 0 to 20 wt.-% or of from >4.0 to 20 wt.-% or of from 0 to 15 wt.-% or of from >4.0 to 15 wt.-%, in particular in the range of from 0 to 10 wt.-% or of from >4.0 to 10 wt.-%, or of from 0 to 5 wt.-%, in each case based on the total weight of the coating composition.

Preferably, the obtained coating composition is sprayable.

Preferably, the coating composition is obtainable by mixing components (A) and (B) in a weight ratio (component (A)/component (B)) in the range of from 5:1 to 1:2. More preferably, mixing is performed in a weight ratio in the range of from 4.5:1 to 1:1.5, even more preferably in a weight ratio in the range of from 4:1 to 1:1.1, in particular in a weight ratio in the range of from 3.5:1 to 1:1, most preferred in a weight ratio in the range of from 3.25:1 to 1.1:1.

Mixing is preferably performed in a high-pressure device with countercurrent injection technology by making use of the impingement mixing principle.

Mixing of components (A) and (B) is in particular performed as follows:
Components (A) and (B), being located in separate containers, are transferred separately via proportioning pumps to a heating element such as a block heater. Transfer of the components is accomplished via a pre-heated pipe to an impingement mixing chamber within a spray gun. Such mixing chambers with the corresponding bores are manufactured in special geometries in order to be able to homogeneously mix the volume flows of components (A) and (B) with maximum turbulence in fractions of a second. For this purpose, for example, gaps offset by a few hundred nanometers from each other are used. This can be achieved with extremely strict manufacturing tolerances. The reaction mixture thus produced is discharged to the front via an outlet gap and sprayed onto the surface of the substrate such as concrete and/or steel substrate. This means that preferably, no static mixer/mixing rod is used in this mixing system. When the trigger of the spray gun is pulled, in the mixing chamber components (A) and (B) are mixed at high pressure at elevated temperatures with maximum turbulence within sub-seconds. Preferably, component (A) is mixed at a pressure in the range of from 95 to 170 bar, in particular of from >100 to 165 bar. This mixing takes place, preferably, at a temperature in the range of from 70 to 80 °C. Preferably, component (B) is mixed at a pressure in the range of from 80 to 140 bar, in particular of from >85 to 130 bar. This mixing takes place, preferably, at a temperature in the range of from 50 to 65 °C. The reactive mixture is then explosively discharged at the orifice of the gun. When the trigger of the gun is released, the opening of the mixing chamber is blocked mechanically and the mixing process is interrupted. A needle-like bolt can close the mixing chamber and thus has a mechanical self-cleaning effect. A fundamental advantage of this mixing technology over the static mixer principle is that short work interruptions are practically possible at any time without changing the mixing module or mixing chamber.

This mixing principle/system is in particular advantageous compared to the Sulzer mixing system (with static mixer/mixing rod) described in WO 2017/172906 A2, which is operated by compressed air. A disadvantage of the Sulzer mixing system is that due to the use of compressed air many, very small air bubbles are introduced into the sealant during the spraying process because the spraying is carried out by means of compressed air. In contrast, when mixed in the high-pressure system with countercurrent injection technology, the sealant is essentially free of air bubbles, meaning that no additional air bubbles are introduced/injected into the sealant. Further, the use of the Sulzer mixing system results in a large amount of plastic waste, as the cartridges and mixing rods are made of plastic and must be disposed of after use. In contrast, the above described mixing system does not produce any plastic waste.

Mixing techniques and systems suitable for mixing components (A) and (B) and for spraying the resulting inventive coating composition are, e.g., disclosed in WO 2018/050482 A1 and EP 1 264 640 B1.

### Inventive use, inventive method and inventive coated substrate

A further subject-matter of the present invention is the use of the inventive coating composition as sealant, in particular for providing a waterproof coating on an optionally pre-coated substrate, preferably on an optionally pre-coated steel and/or optionally pre-coated concrete substrate. If the optionally pre-coated substrate is a substrate made of steel, the substrate preferably is not a fuel tank, in particular not an aircraft fuel tank. The term "waterproof coating" means a "waterproof membrane" formed on the substrate, i.e. a continuous protective coating layer formed on the substrate after curing as outlined, e.g., in DIN EN 1504-2 (January 2005) for concrete substrates. Such a coating layer does not comprise any seams and/or seam lines. Since the coating is a continuous protective layer it is a waterproof coating. Such a coating is to be distinguished from, e.g., web material (bitumen), which always contains a seam or seam line, which in turn must be closed, for example, by welding after application.

All preferred embodiments described above herein in connection with the inventive coating system and the inventive coating composition and the preferred embodiments thereof, are also preferred embodiments of the inventive use.

A further subject-matter of the present invention is a method of applying the coating composition to a substrate and in particular a method of sealing an optionally pre-coated surface of a substrate, preferably made of concrete and/or steel, comprising at least step (1), namely
(1) applying, preferably spraying and/or brushing, in particular spraying, the inventive coating composition onto the optionally pre-coated surface of the substrate, in particular onto the optionally pre-coated surface made of concrete and/or steel.

If the optionally pre-coated substrate used in the inventive method is a substrate made of steel, the substrate preferably is not a fuel tank, in particular not an aircraft fuel tank.

The inventive method is preferably performed in order to provide a waterproof coating on a substrate, preferably on the optionally pre-coated steel and/or optionally pre-coated concrete substrate.

All preferred embodiments described above herein in connection with the inventive coating system and the inventive coating composition and the inventive use and the preferred embodiments thereof, are also preferred embodiments of the inventive method.

This can be done with a 2K-compressed air supported cartridge apparatus, with a 2K-low pressure or 2K-high pressure dosing system. It may also be done manually. Preferably, the same device is used for the spraying step (1), which is also used for mixing of components (A) and (B), i.e. by making use of a high-pressure device (>150 bar) with countercurrent injection technology and by further making use of the impingement mixing principle.

The inventive coating composition is preferably sprayed onto the outside of a suitable substrate such as concrete and/or steel. The inventive sealant also adheres well to the substrate such as concrete and/or steel.

Preferably, the inventive method further comprises a curing step (2), namely
(2) curing the applied, in particular sprayed, inventive coating composition at a temperature in the range of from 0 °C to 23 °C for 0.5 to 5 hours, preferably for 1 to 4 hours.

Preferably, the inventive coating composition is applied onto a surface of a substrate in a dry layer thickness in the range of from 15 to 5 000 µm, in particular of from 100 to 2 000 µm. In particular, when the inventive coating composition is used as a topcoat composition, the dry layer thickness is preferably in the range of from 15 to 50 µm, in particular of from 20 to 45 µm. In particular, when the inventive coating composition is used as a sealant for providing a waterproof membrane, the dry layer thickness is preferably in the range of from 100 to 5000 µm, in particular of from 150 to 2 000 µm.

A further subject-matter of the present invention is a coated substrate such as a coated and in particular sealed substrate, in particular a sealed concrete and/or steel substrate, obtainable by the inventive method. If the sealed substrate obtainable by the inventive method is a substrate made of steel, the sealed substrate preferably is not a sealed fuel tank, in particular not a sealed aircraft fuel tank.

All preferred embodiments described above herein in connection with the inventive coating system and the inventive coating composition and the inventive use as well as the inventive method and the preferred embodiments thereof, are also preferred embodiments of the inventive coated substrate.

The substrates used are preferably substrates used in the field of construction, for example substrates used in the construction of buildings, roofs, bridges, foundations, ships etc. The inventive coating compositions can also be used for (interior or exterior) sealing of floors and/or floor covering coatings in the industrial sector, but also in the bulk material processing sector (for conveyor belts etc.). The substrates preferably contain a metal and/or metal alloy such as steel and/or concrete. In particular, the substrates are made of a metal and/or metal alloy such as steel and/or concrete. Most preferred are substrates made of concrete. The substrates may be subjected to a pretreatment and/or a pre-coating before applying the inventive sealant to them. Preferably, the substrates used bear at least one preferably cured coating layer such as a primer coating layer as a pre-coating layer, before the inventive coating composition is applied thereto.

### METHODS

### 1. Solid content

The solid content (non-volatile content) is determined via DIN EN ISO 3251:2008-06 at 105 °C for 60 min.

### 2. VOC content

The content of volatile organic compounds (VOC) is determined via DIN EN ISO 11890-1:2007-09.

### 3. Hardness

The hardness, in particular Shore A hardness, is measured according to DIN ISO 7619-1:2012-02 using a type A durometer.

### 4. Tensile strength and elongation

Tensile strength and elongation at break are measured according to DIN ISO 527-1:2012-06 and DIN ISO 527-2:2012-06 after 7 days.

### 5. Viscosity

Viscosity is measured using an RVF Brookfield viscometer with spindle 5 at 20 rpm according to DIN EN ISO 2555:2018-09.

### 6. Number average molecular weight

The number average (Mₙ) molecular weights are determined by means of gel permeation chromatography (GPC) with tetrahydrofuran as eluent and using a polystyrene standard based on DIN 55672-1 (date: August 2007). A styrenedivinylbenzene copolymer is used as column material.

### 7. Adhesive tensile strength

Adhesive tensile strength (pull-off-strength) is measured according to DIN 1048-2:1991-06 after 7 days at 23 °C (room temperature) or at 0 °C in a climate chamber.

### EXAMPLES

The following examples further illustrate the invention but are not to be construed as limiting its scope. In the following, all amounts given in the Tables are parts by weight if not indicated otherwise.

### 1. Preparation of inventively used components (A) and (B)

**1.1** In Table 1 all constituents used for preparing component (A) are listed. All constituents used are solvent-free. Diisopropyl naphthalene (isomeric mixture) has a boiling point of 290-300 °C and thus does not contribute to any VOC content. Versalink^{®} P-1000 is a commercial product of the company Evonik and is an oligomeric diamine, namely poly(1,4-butanediol) bis(4-aminobenzoate), which is liquid at room temperature (23 °C) (amine equivalent weight: 575-625). The reactive diluent, HALS, UV absorbers I and II, defoamers I and II, air release agents I and II and rheological additives I and II used are in each case commercially available products.
**1.2** In Table 1 also the constituent used for preparing component (B) is listed. A commercial solvent-free product has been used, namely SUPRASEC^{®} 2029, which is a commercial product of the company Huntsman and is a uretonimine modified MDI containing polyether moieties and having on average 2.1 NCO-groups (NCO content: 24.5 wt.-%).

### 2. Preparation of inventive coating compositions and investigation of their properties and of properties of the coatings resulting therefrom

Exemplary coating compositions 1 to 5 (examples 1 to 5) are prepared from the components (A) and (B) listed in Table 1. 100 parts by weight of component (A) have in each case been mixed with 33 parts by weight of component (B). The resulting coating composition obtained from components (A) and (B) is then manually applied onto a substrate at 23 °C or at 0 °C.

Alternatively, it is possible to perform a mixing and spraying application as follows: the respective components (A) and (B) are transferred separately via proportioning pumps to a block heater. Transfer of the components (A) and (B) is accomplished via a heated pipe to an impingement mixing chamber into a spray gun. When the trigger of the spray gun is pulled, in the mixing chamber components (A) and (B) are mixed at high pressure (>150 bar) at 70-80 °C with maximum turbulence within sub-seconds. The reactive mixture is then explosively discharged at the orifice of the gun. When the trigger of the gun is released, the opening of the mixing chamber is blocked mechanically and the mixing process is interrupted.

Inventively used component (A) shows very favorable and unique gelation and curing properties when reacted with inventively used component (B). A long pot life and a rapid curing are surprisingly observed. In contrast, when component (A) is reacted with MDI as a comparatively used constituent (b1) only (i.e. with a non-modified MDI) it has been experimentally found that curing is less effective (delayed) and a higher tackiness is observed. Moreover, mechanical properties of such cured materials are inferior compared to the inventive coating system, which makes use of inventively used component (B).

The coating composition applied to the substrate represents a sealant. As substrate concrete has been used. The concrete substrate was a concrete slab; specification for DIN EN 1504-2 (January 2005) (MC) test OS-8; primed with a conventional 2K EP Primer (0.5 kg/m² rolled), spreaded with quartz sand (grain 0.3-0.8 mm), after 16 hours waterproofing 2.0 kg/m², rolled.

The curing was performed at room temperature (23 °C) or was performed at 0 °C.

For the sealant of examples 1, 2 and 5 the following properties have been determined: The viscosity of the sealant, measured 10 minutes after mixing, is 50 - 150 Pa·s. The hardness of 60-90 Shore A at 23 °C is achieved in 16-24 hours. No tackiness is observed after this time. The final hardness is 81 Shore A (for example 1). The specific density is 1.14 g/cm³ (range: 1.0 - 1.30 g/cm³) (for example 1). The sealant is in each case applied in a layer thickness of 100 - 2 000 µm. The sealant is in each case transparent.

**Table 1**

| | **Example 1** | **Example 2** | **Example 3** | **Example 4** | **Example 5** |
|---|---|---|---|---|---|
| | *Component (A)* | *Component (A)* | *Component (A)* | *Component (A)* | *Component (A)* |
| Versalink^{®} P-1000 | 79.70 | 75.00 | 75.00 | 75.00 | 74.20 |
| Diphenylkresyl phosphate | 16.00 | 15.50 | - | 20.00 | - |
| Triethyl phosphate | - | - | 20.00 | - | - |
| Diisopropyl naphthalene (isomeric mixture) | - | - | - | - | 15.50 |
| Reactive diluent | - | 5.50 | - | - | 5.50 |
| HALS (hindered amine light stabilizer), | 0.30 | 0.50 | - | - | 0.30 |
| UV absorber I | 1.00 | - | - | - | 1.00 |
| UV absorber II | - | 0.50 | 1.00 | 1.00 | - |
| Defoamer I | - | - | 0.20 | 0.20 | - |
| Defoamer II | - | - | 0.80 | 0.80 | - |
| Air release additive I | 1.50 | 1.50 | - | - | - |
| Air release additive II | - | - | - | - | 1.50 |
| Silquest^{®} A 187 | 1.00 | 1.00 | 1.00 | 1.00 | 1.00 |
| Rheological additive I | - | | 2.00 | 2.00 | - |
| Rheological additive II | 0.50 | 0.50 | - | - | 1.00 |
| Σ | 100.00 | 100.00 | 100.00 | 100.00 | 100.00 |

| | *Component (B)* | *Component (B)* | *Component (B)* | *Component (B)* | *Component (B)* |
|---|---|---|---|---|---|
| SUPRASEC^{®} 2029 | 100.00 | 100.00 | 100.00 | 100.00 | 100.00 |

### 3. Preparation of comparatively used components (A) and (B) and of coating compositions according to comparative examples 1 and 2 as well as investigation of the properties of the resulting coatings

**3.1** In Table 2 all constituents used for preparing comparatively used component (A) are listed. In each case components (A) contain a significant amount of fillers such as barium sulfate, talcum, fumed silica and aluminum trihydroxide. The air release agent, rheological additive, dispersing agent and plasticizer used are in each case commercially available products.

In Table 2 also the constituents used for preparing comparatively used component (B) are listed. Mixture M1 is a mixture of SUPRASEC^{®} 2029, an NCO-groups containing MDI prepolymer and a stabilizer.

3.2 Comparative coating compositions 1 and 2 are prepared from the components (A) and (B) listed in Table 2. 100 parts by weight of component (A) have been mixed with 20 parts by weight of component (B) for preparing Comparative example 1. 100 parts by weight of component (A) have been mixed with 10 parts by weight of component (B) for preparing Comparative example 2. The resulting coating composition obtained from components (A) and (B) is then sprayed onto a substrate.

The application method is performed as outlined in detail within item **2.** By this method respective cured coatings can be obtained.

**3.3** Properties of the coatings obtained from comparative coating compositions 1 and 2 have been investigated and compared with the coatings obtained from inventive coating compositions 1, 2 and 5. It can be seen from Table 3 that with filler containing comparative examples 1 and 2 only an insufficient tensile strength as well as an insufficient adhesive tensile strength on concrete is achieved compared to inventive examples 1, 2 and 5. With respect to comparative example 1 additionally an only insufficient elongation is achieved. In addition, inventive examples 1, 2 and 5 show an improved adhesive tensile strength, a faster curing time and a shorter tack-free time than comparative example 2. The curing time is the time after which a Shore A hardness of 81 is reached (at room temperature (23° C)).

**Table 2**

| | **Comparative example 1** | **Comparative example 2** |
|---|---|---|
| | *Component (A)* | *Component (A)* |
| Versalink^{®} P-1000 | 30.0 | 30.0 |
| Aluminum trihydroxide | 40.8 | - |
| Barium sulfate | - | 49.6 |
| White pigment paste | 1.30 | 1.30 |
| Black pigment paste | 0.70 | 0.70 |
| Dispersing agent | 0.40 | 0.40 |
| Talkum | 5.0 | - |
| Fumed silica | 0.5 | - |
| Plasticizer | 14.0 | 16.0 |
| Alumosilicate | 3.0 | - |
| Air release additive | 1.0 | 1.0 |
| Silquest^{®} A 187 | 3.0 | 1.0 |
| Rheological additive | 0.3 | - |
| Σ | 100.00 | 100.00 |

| | *Component (B)* | *Component (B)* |
|---|---|---|
| SUPRASEC^{®} 2029 | - | 100.00 |
| Mixture M1 | 100.0 | - |

**Table 3**

| | **Example 1** | **Example 2** | **Example 5** | **Comparative example 1** | **Comparative example 2** |
|---|---|---|---|---|---|
| Elongation [%] | 500 | 420 | 400 | 200 | 500 |
| Tensile strength [MPa] | 19 | 18 | 20 | 6 | 6 |
| Adhesive tensile strength on concrete at 23 °C [MPa] | 4.4 | 4.4 | 4.6 | 3.8 | 3.5 |
| Curing time [h] | <16 | <16 | <16 | nd | 16 |
| Adhesive tensile strength on concrete at 0 °C [MPa] | >1.6 | >1.6 | >1.6 | nd | 1.6 (adhesive failure in sanded primer) |
| Tack-free time [h] | <4 | <4 | <4 | nd | 4 |

| | | | | | |
|---|---|---|---|---|---|
| nd = not determined | | | | | |

For a conventional polyurea system making use of an IPDI-based NCO-group containing constituent present in component (B) even inferior properties were obtained (tack-free time: 10 h; curing time: 48 h; adhesive tensile strength: 0.5 MPa (cohesive failure in membrane)).

### 4. Preparation of further comparatively and inventively used components (A) and (B) and of coating compositions obtained therefrom as well as investigation of the properties of the resulting coatings

**4.1** In Table 4 all constituents used for preparing further comparatively and inventively used components (A) and (B) are listed. Exemplary coating composition 6 (example 6) and comparative coating compositions 3, 4, 5 and 6 (comparative examples 3 to 6) are prepared from these components (A) and (B) as listed in Table 4.

Reactive diluent, UV absorbers I and II, defoamer I and rheological additive I are in each case commercially available products. Masterseal^{®} M800 PTB is the hardener component of commercially available product Masterseal^{®} M800, being a MDI-based prepolymer with a NCO-group content of 12 wt.-%. Masterseal^{®} M689 PTB is the hardener component of commercially available product Masterseal^{®} M689, being a MDI-based prepolymer with a NCO-group content of 15 wt.-%. Lupranat^{®} M20R is a commercially available hardener (polymeric MDI) with a NCO-group content of 31.5 wt.-%. Lupranat^{®} M70R is also a commercially available hardener (polymeric MDI) with a NCO-group content of 31.5 wt.-%.

100 parts by weight of component (A) have been mixed with 33 parts by weight of component (B) in case of example 6. In case of comparative example 3 the mixing ratio by weight of (A) to (B) was 100:66. In case of comparative example 4 the mixing ratio by weight of (A) to (B) was 100:53. In case of each of comparative examples 5 and 6 the mixing ratio by weight of (A) to (B) was 100:25.

Each of the resulting coating composition obtained from components (A) and (B) was then manually applied onto a substrate at 23 °C. The concrete substrate as outlined in item **2.** was used.

**Table 4**

| | **Example 6** | **Comparative example 3** | **Comparative example 4** | **Comparative example 5** | **Comparative example 6** |
|---|---|---|---|---|---|
| | *Component (A)* | *Component (A)* | *Component (A)* | *Component (A)* | *Component (A)* |
| Versalink^{®} P-1000 | 74.20 | 74.20 | 74.20 | 74.20 | 74.20 |
| Diisopropyl naphthalene (isomeric mixture) | 15.50 | 15.50 | 15.50 | 15.50 | 15.50 |
| Reactive diluent | 5.50 | 5.50 | 5.50 | 5.50 | 5.50 |
| UV absorber I | 1.00 | 1.00 | 1.00 | 1.00 | 1.00 |
| UV absorber II | 0.30 | 0.30 | 0.30 | 0.30 | 0.30 |
| Defoamer I | 1.50 | 1.50 | 1.50 | 1.50 | 1.50 |
| Silquest^{®} A 187 | 1.00 | 1.00 | 1.00 | 1.00 | 1.00 |
| Rheological additive I | 1.00 | 1.00 | 1.00 | 1.00 | 1.00 |
| Σ | 100.00 | 100.00 | 100.00 | 100.00 | 100.00 |

| | *Component (B)* | *Component (B)* | *Component (B)* | *Component (B)* | *Component (B)* |
|---|---|---|---|---|---|
| SUPRASEC^{®} 2029 | 100.00 | - | - | - | - |
| Masterseal^{®} M800 PTB | - | 100.000 | - | - | - |
| Masterseal^{®} M689 PTB | - | - | 100.00 | - | - |
| Lupranat^{®} M20R | - | - | - | 100.00 | - |
| Lupranat^{®} M70R | - | - | - | - | 100.00 |

**4.2** Properties of the coatings obtained from example 6 and from comparative examples 3 to 6 as well as of the compositions as such have been investigated. It can be seen from Table 5 that comparative examples 3 to 6 in particular lead to an only insufficient tensile strength compared to inventive example 6. In addition, inventive example 6 leads to a shorter gel time, which is advantageous. Gel time is defined as the time it takes until the viscosity of the composition obtained after mixing components (A) and (B) reaches a value of 15000 mPas at room temperature (23 °C), wherein the viscosity is measured according to the method disclosed in the 'methods' section.

**Table 5**

| | **Example 6** | **Comparative example 3** | **Comparative example 4** | **Comparative example 5** | **Comparative example 6** |
|---|---|---|---|---|---|
| Elongation [%] | 303 | 247 | 218 | 79 | 83 |
| Tensile strength [MPa] | 22 | 2.3 | 2.7 | 4.1 | 5.4 |
| Gel time [min] | 19 | 87 | 62 | 26 | 26 |

### 5. Preparation of additional comparatively and inventively used components (A) and (B) and of coating compositions obtained therefrom as well as investigation of the properties of the resulting coatings

**5.1** In Table 6 all constituents used for preparing further comparatively and inventively used components (A) and (B) are listed. Exemplary coating compositions 7 and 8 (examples 7 and 8) and comparative coating compositions 7 and 8 (comparative examples 7 and 8) are prepared from these components (A) and (B) as listed in Table 6.

In examples 7 and 8 the amount of fillers present in component (A) is in each case 40 wt.-%. In comparative examples 7 and 8 the amount of fillers present in component (A) is in each case 60 wt.-%.

**Table 6**

| | **Example 7** | **Comparative example 7** | **Example 8** | **Comparative example 8** |
|---|---|---|---|---|
| | *Component (A)* | *Component (A)* | *Component (A)* | *Component (A)* |
| Versalink^{®} P-1000 | 34.20 | 14.20 | 34.20 | 14.20 |
| Barite filler | 40.00 | 60.00 | - | - |
| Aluminum trihydroxide filler | - | - | 35.60 | 53.40 |
| Talkum filler | - | - | 4.40 | 6.60 |
| Diisopropyl naphthalene (isomeric mixture) | 15.50 | 15.50 | 15.50 | 15.50 |
| Reactive diluent | 5.50 | 5.50 | 5.50 | 5.50 |
| UV absorber I | 1.00 | 1.00 | 1.00 | 1.00 |
| UV absorber II | 0.30 | 0.30 | 0.30 | 0.30 |
| Defoamer I | 1.50 | 1.50 | 1.50 | 1.50 |
| Silquest^{®} A 187 | 1.00 | 1.00 | 1.00 | 1.00 |
| Rheological additive I | 1.00 | 1.00 | 1.00 | 1.00 |
| Σ | 100.00 | 100.00 | 100.00 | 100.00 |

| | *Component (B)* | *Component (B)* | *Component (B)* | *Component (B)* |
|---|---|---|---|---|
| SUPRASEC^{®} 2029 | 100.00 | 100.00 | 100.00 | 100.00 |

100 parts by weight of component (A) have been mixed with 21 parts by weight of component (B) in case of each of examples 7 and 8. In case of each of comparative examples 7 and 8 the mixing ratio by weight of (A) to (B) was 100:15.

Each of the resulting coating composition obtained from components (A) and (B) was then manually applied onto a substrate at 23 °C. The concrete substrate as outlined in item **2.** was used.

**5.2** Properties of the coatings obtained from examples 7 and 8 and from comparative examples 7 and 8 as well as of the compositions as such have been investigated. It can be seen from Table 7 that comparative examples 7 and 8 lead to an only insufficient tensile strength and elongation compared to inventive examples 7 and 8. In addition, inventive examples 7 and 8 lead to shorter gel times, which is advantageous. Gel time is defined as the time it takes until the viscosity of the composition obtained after mixing components (A) and (B) reaches a value of 15000 mPas at room temperature (23 °C), wherein the viscosity is measured according to the method disclosed in the 'methods' section.

**Table 7**

| | **Example 7** | **Comparative example 7** | **Example** 8 | **Comparative example 8** |
|---|---|---|---|---|
| Elongation [%] | 240 | 24 | 113 | 9 |
| Tensile strength [MPa] | 8.8 | 4.0 | 6.8 | 3.4 |
| Gel time [min] | 22 | 251 | 40 | >180 |

## Claims

1. A method of sealing an optionally pre-coated surface of a substrate, preferably made of concrete and/or steel, comprising at least step (1), namely
(1) applying a coating composition onto the optionally pre-coated surface of the substrate, in particular onto the optionally pre-coated surface made of concrete and/or steel,
wherein the coating composition is obtainable by mixing components (A) and (B) of a coating system with each other, said coating system being a two-component (2K) coating system consisting of two components (A) and (B) being separate from each other,
wherein component (A) comprises at least one constituent (a1) containing at least one aromatic moiety and bearing at least two primary and/or secondary amino groups, and wherein the amount of any fillers present in component (A) does not exceed 45 wt.-%, based on the total weight of component (A),
wherein component (B) comprises at least one constituent (b1) containing at least one aromatic moiety and bearing at least two isocyanate groups,
wherein each of components (A) and (B) has a solid content of at least 95 wt.-%, based on the total weight of the respective component,
**characterized in that** constituent (b1) present in component (B) bears at least one carbodiimide and/or uretonimine unit and further comprises at least one structural unit (I): 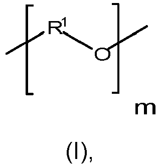 wherein R¹ is a C₂ to C₈ alkylene residue, and parameter m is an integer in the range of from 1 to 200, and wherein the NCO content present in constituent (b1) is in the range of from 20 to 35 wt.-%, based on the total weight of constituent (b1).

2. The method according to claim 1, **characterized in that** constituent (a1) comprises at least two aromatic moieties and **in that** at least one of the primary and/or secondary amino groups is directly bound to each of these at least two aromatic moieties.

3. The method according to claim 1 or 2, **characterized in that** constituent (a1) further comprises at least one structural unit (II): 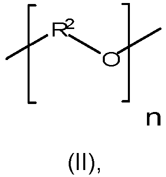
wherein R² is a C₂ to C₈ alkylene residue, more preferably a C₂ to C₆ alkylene residue, in particular a C₂ to C₄ alkylene residue and
parameter n is an integer in the range of from 1 to 100, more preferably in the range of from 1 to 40, in particular in the range of from 1 to 10, most preferably between 1 and 5.

4. The method according to any one of the preceding claims, **characterized in that** constituent (a1) is present in component (A) in an amount in the range of from of 50 to 95 wt.-%, more preferably of from 55 to 90 wt.-%, based on the total weight of component (A).

5. The method according to any one of the preceding claims, **characterized in that** constituent (b1) is the only isocyanate-group containing constituent present in component (B).

6. The method according to any one of the preceding claims, **characterized in that** constituent (b1) is obtainable by subjecting at least one prepolymer of an aromatic diisocyanate, preferably of MDI, bearing at least two isocyanate groups, wherein said prepolymer has been prepared by reaction of a polyether polyol with at least one aromatic diisocyanate and/or a polymer thereof, to a decarboxylation condensation reaction under formation of at least one carbodiimide and/or uretonimine unit.

7. The method according to any one of the preceding claims, **characterized in that** the solids content of component (A) is >98 wt.-%, based on the total weight of component (A), and **in that** the solids content of component (B) is >98 wt.-%, based on the total weight of component (B).

8. The method according to any one of the preceding claims, **characterized in that** the coating composition is sprayable.

9. The method according to any one of the preceding claims, **characterized in that** the coating composition is obtainable by mixing components (A) and (B) in a weight ratio (component (A)/component (B)) in the range of from 5:1 to 1:2.

10. The method according to any one of the preceding claims, **characterized in that** the mixing of components (A) and (B) of the coating system in order to prepare the coating composition is performed in a high-pressure device with countercurrent injection technology by making use of the impingement mixing principle.

11. A sealed substrate, preferably a sealed concrete and/or steel substrate, obtainable by the method according to any of claims 1 to 10.

12. A use of a coating composition as defined in any of claims 1 to 10 obtainable by mixing components (A) and (B) of a coating system as sealant, in particular for providing a waterproof coating on an optionally pre-coated substrate, preferably on an optionally pre-coated steel and/or concrete substrate.

13. A coating composition as defined in any of claims 1 to 10, which is obtainable by mixing components (A) and (B) of a coating system as defined in any of claims 1 to 7 with each other.

14. A two-component (2K) coating system consisting of two components (A) and (B) as defined in any of claims 1 to 7 being separate from each other.

## Patentansprüche

1. Verfahren zum Abdichten einer gegebenenfalls vorbeschichteten Oberfläche eines Substrats, vorzugsweise aus Beton und/oder Stahl, umfassend mindestens Schritt (1), nämlich
(1) Aufbringen einer Beschichtungszusammensetzung auf die gegebenenfalls vorbeschichtete Oberfläche des Substrats, insbesondere auf die gegebenenfalls vorbeschichtete Oberfläche aus Beton und/oder Stahl, wobei die Beschichtungszusammensetzung durch Mischen von Komponenten (A) und (B) eines Beschichtungssystems miteinander erreichbar ist, wobei das Beschichtungssystem ein Zweikomponenten(2K)-Beschichtungssystem ist, das aus zwei voneinander getrennten Komponenten (A) und (B) besteht,
wobei Komponente (A) mindestens einen Bestandteil (a1) umfasst, der mindestens einen aromatischen Anteil enthält und mindestens zwei primäre und/oder sekundäre Aminogruppen trägt, und wobei die Menge jeglicher in Komponente (A) vorhandenen Füllstoffe 45 Gew.-% nicht überschreitet, bezogen auf das Gesamtgewicht von Komponente (A),
wobei Komponente (B) mindestens einen Bestandteil (b1) umfasst, der mindestens einen aromatischen Anteil enthält und mindestens zwei Isocyanatgruppen trägt,
wobei jede von Komponenten (A) und (B) einen Feststoffgehalt von mindestens 95 Gew.-% aufweist, bezogen auf das Gesamtgewicht der jeweiligen Komponente, **dadurch gekennzeichnet, dass** der in Komponente (B) vorhandene Bestandteil (b1) mindestens eine Carbodiimid- und/oder Uretonimineinheit trägt und ferner mindestens eine Struktureinheit (I) umfasst: 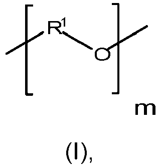 worin R¹ ein C₂- bis C₈-Alkylenrest ist, und Parameter m eine Ganzzahl im Bereich von 1 bis 200 ist, und wobei der in Bestandteil (b1) vorhandene NCO-Gehalt im Bereich von 20 bis 35 Gew.-% liegt, bezogen auf das Gesamtgewicht des Bestandteils (b1).

2. Verfahren nach Anspruch 1, **dadurch gekennzeichnet, dass** Bestandteil (a1) mindestens zwei aromatische Anteile umfasst, und dass mindestens eine der primären und/oder sekundären Aminogruppen direkt an jeden dieser mindestens zwei aromatischen Anteile gebunden ist.

3. Verfahren nach Anspruch 1 oder 2, **dadurch gekennzeichnet, dass** Bestandteil (a1) weiterhin mindestens eine Struktureinheit (II) umfasst: 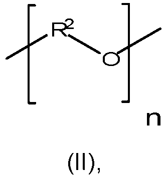
wobei R² ein C₂- bis C₈-Alkylenrest ist, bevorzugter ein C₂- bis C₆-Alkylenrest, insbesondere ein C₂- bis C₄-Alkylenrest, und
Parameter n eine Ganzzahl im Bereich von 1 bis 100 ist, bevorzugter im Bereich von 1 bis 40, insbesondere im Bereich von 1 bis 10, am meisten bevorzugt zwischen 1 und 5.

4. Verfahren nach einem der vorhergehenden Ansprüche, **dadurch gekennzeichnet, dass** Bestandteil (a1) in Komponente (A) in einer Menge im Bereich von 50 bis 95 Gew.-%, bevorzugter von 55 bis 90 Gew.-% vorhanden ist, bezogen auf das Gesamtgewicht von Komponente (A).

5. Verfahren nach einem der vorhergehenden Ansprüche, **dadurch gekennzeichnet, dass** Bestandteil (b1) der einzige Isocyanatgruppe enthaltene Bestandteil ist, der in Komponente (B) vorhanden ist.

6. Verfahren nach einem der vorhergehenden Ansprüche, **dadurch gekennzeichnet, dass** Bestandteil (b1) erreichbar ist, indem mindestens ein Präpolymer eines aromatischen Diisocyanats, vorzugsweise von MDI, das mindestens zwei Isocyanatgruppen trägt, wobei das Präpolymer durch Reaktion eines Polyetherpolyols mit mindestens einem aromatischen Diisocyanat und/oder einem Polymer davon hergestellt worden ist, einer Decarboxylierungskondensationsreaktion unter Bildung von mindestens einer Carbodiimid- und/oder Uretonimineinheit unterzogen wird.

7. Verfahren nach einem der vorhergehenden Ansprüche, **dadurch gekennzeichnet, dass** der Feststoffgehalt von Komponente (A) >98 Gew.-% ist, bezogen auf das Gesamtgewicht von Komponente (A), und dadurch, dass der Feststoffgehalt von Komponente (B) >98 Gew.-% ist, bezogen auf das Gesamtgewicht des Bestandteils (B).

8. Verfahren nach einem der vorhergehenden Ansprüche, **dadurch gekennzeichnet, dass** die Beschichtungszusammensetzung sprühbar ist.

9. Verfahren nach einem der vorhergehenden Ansprüche, **dadurch gekennzeichnet, dass** die Beschichtungszusammensetzung durch Mischen von Komponenten (A) und (B) in einem Gewichtsverhältnis (Komponente (A)/Komponente (B)) im Bereich von 5:1 bis 1:2 erreichbar ist.

10. Verfahren nach einem der vorhergehenden Ansprüche, **dadurch gekennzeichnet, dass** das Mischen von Komponenten (A) und (B) des Beschichtungssystems, um die Beschichtungszusammensetzung herzustellen, in einer Hochdruckeinrichtung mit Gegenstromeinspritztechnologie unter Verwendung des Aufprallmischprinzips durchgeführt wird.

11. Abgedichtetes Substrat, vorzugsweise abgedichtetes Beton- und/oder Stahlsubstrat, erreichbar durch das Verfahren nach einem der Ansprüche 1 bis 10.

12. Verwendung einer Beschichtungszusammensetzung nach einem der Ansprüche 1 bis 10, die durch Mischen von Komponenten (A) und (B) eines Beschichtungssystems als Abdichtmittel erhältlich ist, insbesondere zum Bereitstellen einer wasserdichten Beschichtung auf einem gegebenenfalls vorbeschichteten Substrat, vorzugsweise auf einem gegebenenfalls vorbeschichteten Stahl- und/oder Betonsubstrat.

13. Beschichtungszusammensetzung nach einem der Ansprüche 1 bis 10, die durch Mischen von Komponenten (A) und (B) eines Beschichtungssystems nach einem der Ansprüche 1 bis 7 miteinander erreichbar ist.

14. Zweikomponenten(2K)-Beschichtungssystem, bestehend aus zwei voneinander getrennten Komponenten (A) und (B) nach einem der Ansprüche 1 bis 7.

## Revendications

1. Procédé de scellement d'une surface éventuellement pré-revêtue d'un substrat, de préférence faite en béton et/ou en acier, comprenant au moins l'étape (1), à savoir (1) application d'une composition de revêtement sur la surface éventuellement pré-revêtue du substrat, en particulier sur la surface éventuellement pré-revêtue faite en béton et/ou en acier,
dans lequel la composition de revêtement peut être obtenue en mélangeant les composants (A) et (B) d'un système de revêtement, ledit système de revêtement étant un système de revêtement à deux composants (2K) constitué de deux composants (A) et (B) qui sont distincts l'un de l'autre,
dans lequel le composant (A) comprend au moins un constituant (a1) contenant au moins un groupement aromatique et portant au moins deux groupes amino primaire et/ou secondaire, et dans lequel la quantité de toutes charges présentes dans le composant (A) ne dépasse pas 45 % en poids, par rapport au poids total du composant (A),
dans lequel le composant (B) comprend au moins un constituant (b1) contenant au moins un groupement aromatique et portant au moins deux groupes isocyanate, dans lequel chacun des composants (A) et (B) a une teneur en solides d'au moins 95 % en poids, par rapport au poids total du composant respectif,
**caractérisé en ce que** le constituant (b1) présent dans le composant (B) porte au moins un motif carbodiimide et/ou urétonimine et comprend en outre au moins un motif structural (I) : 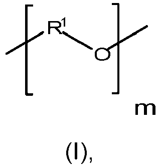 dans lequel R¹ est un radical alkylène en C₂ à C₈, et le paramètre m est un nombre entier dans la plage de 1 à 200, et dans lequel la teneur en NCO présent dans le constituant (b1) est dans la plage de 20 à 35 % en poids, par rapport au poids total du constituant (b1).

2. Procédé selon la revendication 1, **caractérisé en ce que** le constituant (a1) comprend au moins deux groupements aromatiques et **en ce qu'**au moins un des groupes amino primaire et/ou secondaire est directement lié à chacun de ces au moins deux groupements aromatiques.

3. Procédé selon la revendication 1 ou 2, **caractérisé en ce que** le constituant (a1) comprend en outre au moins un motif structural (II) : 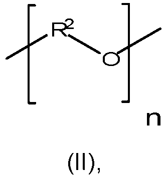
dans lequel R² est un radical alkylène en C₂ à C₈, de préférence un radical alkylène en C₂ à C₆, en particulier un radical alkylène en C₂ à C₄ et
le paramètre n est un nombre entier dans la plage de 1 à 100, plus préférablement dans la plage de 1 à 40, en particulier dans la plage de 1 à 10, le plus préférablement entre 1 et 5.

4. Procédé selon l'une quelconque des revendications précédentes, **caractérisé en ce que** le constituant (a1) est présent dans le composant (A) en une quantité dans la plage de 50 à 95 % en poids, plus préférablement de 55 à 90 % en poids, par rapport au poids total du composant (A).

5. Procédé selon l'une quelconque des revendications précédentes, **caractérisé en ce que** le constituant (b1) est le seul constituant contenant un groupe isocyanate présent dans le composant (B).

6. Procédé selon l'une quelconque des revendications précédentes, **caractérisé en ce que** le constituant (b1) peut être obtenu en soumettant au moins un prépolymère d'un diisocyanate aromatique, de préférence de MDI, portant au moins deux groupes isocyanate, ledit prépolymère ayant été préparé par réaction d'un polyéther polyol avec au moins un diisocyanate aromatique et/ou un polymère de celui-ci, à une réaction de condensation par décarboxylation avec formation d'au moins un motif carbodiimide et/ou urétonimine.

7. Procédé selon l'une quelconque des revendications précédentes, **caractérisé en ce que** la teneur en solides du composant (A) est > 98 % en poids, par rapport au poids total du composant (A), et **en ce que** la teneur en solides du composant (B) est > 98 % en poids, par rapport au poids total du composant (B).

8. Procédé selon l'une quelconque des revendications précédentes, **caractérisé en ce que** la composition de revêtement est pulvérisable.

9. Procédé selon l'une quelconque des revendications précédentes, **caractérisé en ce que** la composition de revêtement peut être obtenue en mélangeant les composants (A) et (B) en un rapport pondéral (composant (A)/composant (B)) dans la plage de 5:1 à 1:2.

10. Procédé selon l'une quelconque des revendications précédentes, **caractérisé en ce que** le mélange des composants (A) et (B) du système de revêtement pour la préparation de la composition de revêtement est effectué dans un dispositif à haute pression avec une technique d'injection à contre-courant en utilisant le principe du mélange par impact.

11. Substrat scellé, de préférence substrat scellé en béton et/ou en acier, pouvant être obtenu par le procédé selon l'une quelconque des revendications 1 à 10.

12. Utilisation d'une composition de revêtement telle que définie dans l'une quelconque des revendications 1 à 10, pouvant être obtenue en mélangeant les composants (A) et (B) d'un système de revêtement en tant qu'agent de scellement, en particulier pour réaliser un revêtement imperméable à l'eau sur un substrat éventuellement pré-revêtu, de préférence sur un substrat éventuellement pré-revêtu en acier et/ou en béton.

13. Composition de revêtement telle que définie dans l'une quelconque des revendications 1 à 10, qui peut être obtenue en mélangeant l'un avec l'autre les composants (A) et (B) d'un système de revêtement tel que défini dans l'une quelconque des revendications 1 à 7.

14. Système de revêtement à deux composants (2K) constitué de deux composants (A) et (B) tels que définis dans l'une quelconque des revendications 1 à 7, qui sont distincts l'un de l'autre.
